Europäisches Patentamt

(19) **European Patent Office**

Office européen des brevets

(11) Publication number: **0018115**
A1

(12) # EUROPEAN PATENT APPLICATION

(21) Application number: **80300984.4**

(22) Date of filing: **28.03.80**

(51) Int. Cl.³: **B 25 B 23/14, E 21 B 19/16, G 01 L 5/24**

(30) Priority: **28.03.79 US 24835**

(43) Date of publication of application: **29.10.80 Bulletin 80/22**

(84) Designated Contracting States: **AT DE FR GB IT NL**

(71) Applicant: **Calhoun, Charles W., 585, South Dogwood, Jackson Wyoming 83001 (US)**

(72) Inventor: **Calhoun, Charles W., 585, South Dogwood, Jackson Wyoming 83001 (US)**

(74) Representative: **Westwood, Edgar Bruce et al, STEVENS, HEWLETT & PERKINS 5, Quality Court Chancery Lane, London WC2A 1HZ (GB)**

(54) **Method and apparatus for measuring the makeup of a threaded connection.**

(57) A method of and apparatus for making up two members (14, 16) having mated threaded connections such as tubing and casing used in drilling and production of oil wells, for ensuring that sufficient threads have been engaged, and proper torque has been applied thereby producing a leak proof joint. The mating threaded connections are threadably engaged while measurements are made of the torque (64) required to turn one of the members relative to the other, and measurements are made of the number of turns (152) of the members relative to each other. Simultaneously, the measured torque and measured turns are plotted on an x–y graphic display (151) showing the torque/turns relationship. The graphic display also includes prerecorded values of minimum and maximum turns, and reference, minimum and maximum torque for the particular threaded connection. The method and apparatus shows, during makeup, any abnormal, torque/turns relationship that may indicate a defective makeup. The method and apparatus also reduces the speed of makeup when the measured torque reaches a predetermined value for controlling the end point of the makeup. A portion (40) of the apparatus may be used independently as a torque measurement assembly.

## METHOD AND APPARATUS FOR MEASURING THE MAKEUP OF A THREADED CONNECTION.

This invention relates to a method and apparatus for making up a threaded connection of two members having mating threads, including threadedly interengaging the mating threads while simultaneously measuring the torque required to turn one of said members relative to the other member and simultaneously counting the number of rotative turns of one member relative to the other member.

It is well known that it is necessary to apply a predetermined amount of torque, together with engagement of a specified number of threads, when making up a threaded connection of two members having mating threads, in order to achieve a leak proof connection. U.S.Patent Nos. 3,368,396; 3,606,664; 3,745,820 illustrate apparatus for measuring torque and counting the number of turns to indicate whether a "bad joint" or a "good joint" has been made up. U.S.Patent No. 4,091,451 teaches that the measurement of torque and turns must remain within specified boundaries or the threaded interconnection is discontinued. Yet other prior art devices record increments of a turn in the form of event marks, and an analogue recording of the torque buildup which can be studied only after the makeup is complete to determine the condition of the makeup.

However, abnormal conditions may exist during the makeup that are not detected by the prior art devices and which may have mechanically damaged the mating threads. The present invention is directed to noting any irregularity in the torque/turns relationship during the makeup so that the operator may cease operations quickly before excessive damage occurs.

In addition, it has been noted that when interengaging the mating threads, the measured torque quickly increases upon contact of mating shoulders which has the effect of providing an erroneous torque measurement as well as inaccurately defining the end of the makeup. The present invention overcomes these problems by reducing the speed of makeup upon a predetermined value of torque.

The present invention as claimed is a method of and an apparatus for measuring the makeup of a threaded connection of two members having mating threads by monitoring the makeup as it proceeds, and simultaneously plotting the torque/turns relationship in an x-y plot in graphic form thereby allowing the operator to visually detect any abnormality that may exist and stop further makeup of the threaded connection.

The invention affords the provision if desired of prerecording on the x-y graphic display the parameter values of minimum and maximum turns, and reference, minimum and maximum torque for comparison with the graphic display of the measured torque and measured turns. The speed of interengagement of the threaded members may be reduced when the measured torque exceeds a predetermined value.

The advantage offered by the invention in a preferred embodiment is mainly that of measuring the makeup of a threaded connection of two members having mating threads by prerecording on an x-y graphic display the values of minimum and maximum turns, and reference, minimum and maximum torque for the made up connection, threadably interengaging the mating threads while simultaneously measuring the torque required to turn one of the members relative to the other member, simultaneously counting the number of rotative turns of said one member relative to the other member, and simultaneously plotting the measured torque and measured turns on the x-y graphic display relative to the prerecorded values of torque and turns for determining whether or not there are any abnormal conditions existing in the makeup during the makeup, and stopping the threaded interengagement in the event that the graphic display indicates that an abnormality exists.

The invention also allows the possibility of utilizing the torque measurement assembly independently of the recorder/controller assembly for a torque measuring apparatus.

One way of carrying out the invention will now be described in detail with reference to the accompanying drawings which illustrate a presently preferred embodiment and in which :-

Figure 1 is a block diagram of an apparatus in accordance with the invention;

Figure 2 is a chart illustrating the relationship between torque and turns in making up a threaded connection;

Figure 3 is an electrical schematic of a remote processing unit;

Figure 4 is an electrical schematic of a main processing unit;

Figure 5 is an electrical schematic of an automatic plotting mechanism of the main processing unit, and

Figure 6 illustrates several plots made by the automatic plotter of Figure 5.

The present invention may be used to connect any two members that are joined together by mating threads. However, for purposes of illustration only, it will be described in connection with the joining of one length of tubular goods such as tubing or casing used in connection with the drilling of oil wells.

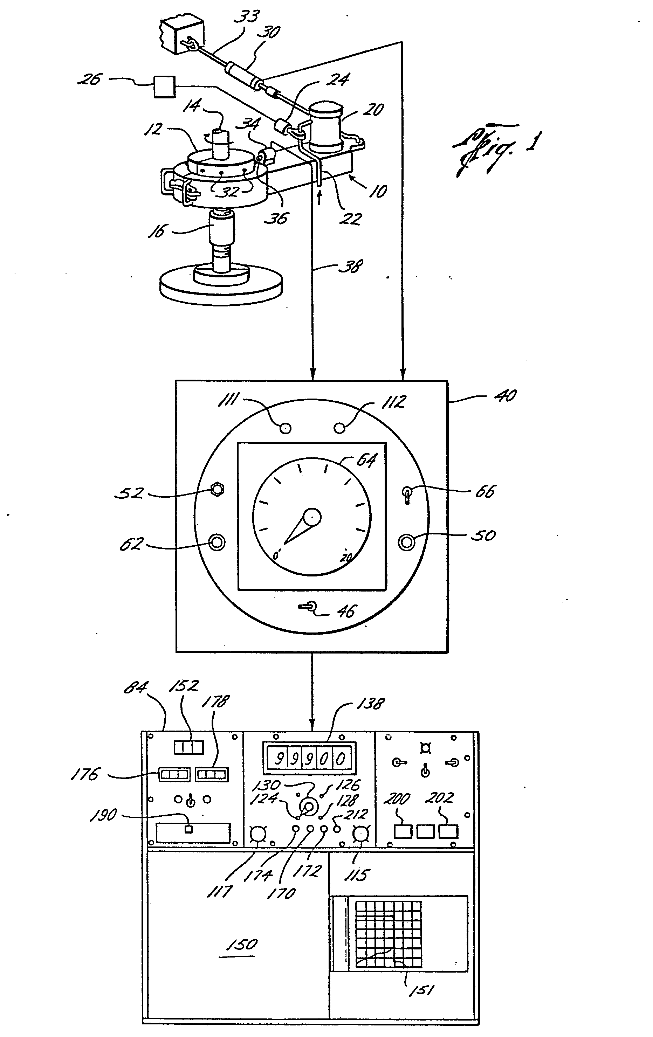

Referring now to Figure 1, pipe tongs 10 include a rotatable jaw member 12 for gripping and rotating a well pipe string section, such as pipe 14. The lower end of pipe 14 is shown being threaded into a pipe coupling 16. A tong prime mover 20, such as a hydraulic motor is connected to the rotatable jaw member 12 by drive mechanism (not shown) in a conventional manner. A supply line 22 provided with a valve 24 is connected to the hydraulic motor 20 for supplying actuating power to the motor 24. An energizing relay 26 actuates the valve 24. Any suitable apparatus for measuring the torque exerted by the rotary jaw member 12 on the well pipe 14 may be utilized. For example, an electric strain gauge 30 may be incorporated in a backup line 33 connected to the power tongs 10 which provide an electrical signal indicative of the torque exerted by the rotary jaw member 12, which torque is proportional to the strain in the backup line 33.

Suitable means are provided for measuring the rotation of the rotatable jaw member 12 and thus of the pipe section 14. For example, the rotary jaw member 14 may be provided with a number of lugs 32 which in turn actuate a microswitch 34 having an actuating arm 36 so that the projections 32 will successively engage actuating arm 36 to momentarily close microswitch 34 as the rotatable jaw member 12 is driven by the motor 20. The result is that a series of pulses or counts will be transmitted through a line 38. Therefore, the thread makeup of the pipe section 14 relative to the coupling 16 may be measured by counting the number of switch closures as the pipe 14 rotates. The above described apparatus for measuring torque and measuring turns is generally conventional.

It is generally known that when connecting two lengths of pipe by threaded engagement to effect a leak proof joint, it is necessary to engage a predetermined number of threads, and apply a predetermined amount of torque. These values are usually referred to as "minimum turns" and "minimum torque". Also, during makeup of pipe some conditions may be encountered that are indicative of defective threads. For example, the threads may be stripped, and excessive turns may occur without achieving the minimum torque value, and is referred to as "maximum turns". Another example is that a very high torque may be applied before minimum turns count has been reached, indicating that the threads are galled and this torque amount is referred to as "maximum torque". Emperical values for minimum turns, minimum torque, maximum turns and maximum torque are available for each weight and grade of pipe used in the drilling of oil wells.

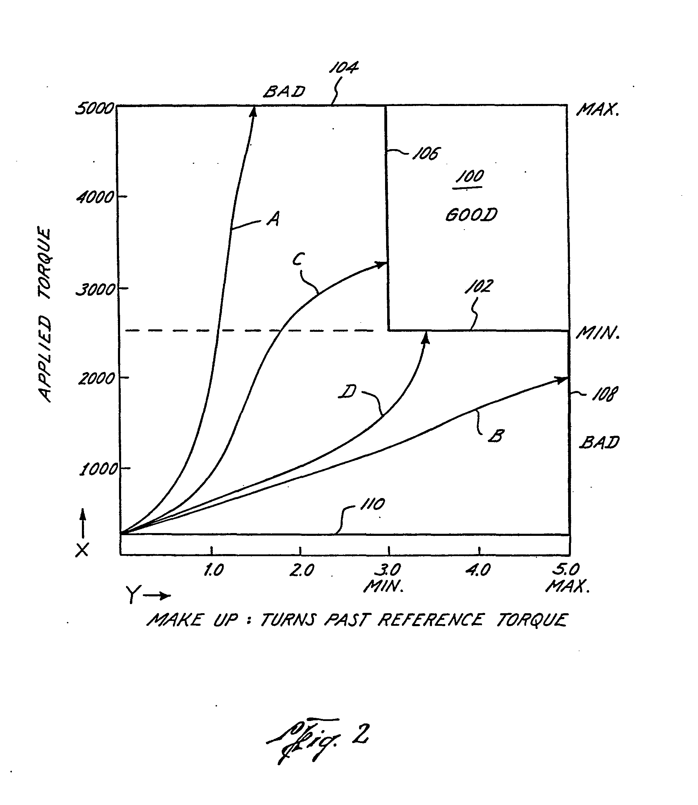

Referring now to Figure 2, a chart is shown of torque versus applied turns for an exemplary grade of pipe. If the measured torque and measured turns fall within the square 100 at the end of a makeup, then the connection is generally considered a good joint. The square 100 is bounded by a minimum torque rating 102, a maximum torque rating 104, a minimum turn 106 and a maximum turn 108. However, if the torque and turn measurement fall outside of the square 100 at the end of the makeup, then the threaded connection is considered a bad joint.

As a threaded connection is being made up, one member, such as pipe section 14, is rotated relative to the other member, such as coupling 16. As the coacting threads between the pipe section 14 and coupling 16 begin to engage, more torque is required to rotate the pipe 14. When the applied torque reaches a predetermined point,

·it is referred to as "reference torque" 110 and is the starting point for beginning the measurement of the turns count of the rotation of the pipe.

In the past, consideration of the torque/turns relationship was given at the end of the makeup or as in U.S. Patent No. 4,091,451 was predicted by a processor to be good or bad if the makeup proceeded between certain boundary limits.

The present invention is directed to utilizing the measured torque and measured turns to simultaneously plot a torque/turns relationship on an x-y graphic display to allow the operator to compare the plot with the torque and turn parameters for the particular makeup and control further makeup on the basis of his visual inspection. As discussed earlier, several conditions may exist during makeup that would indicate defective threads. In Figure 2 the torque/turns plot A and B show two such defective makeups. On curve A maximum torque 104 is reached before minimum turns 106 is reached thereby indicating galled threads, and curve B reaches maximum turns 108 before minimum torque 102 is reached thereby indicating stripped threads. Curves C and D indicate good makeups since minimum turns 106 and minimum torque 102 have been reached before encountering either maximum torque 104 or maximum turns 108. The operator can watch the progress of the graphs A, B, C and D and would recognize that graphs A and B are proceeding to a bad makeup prior to their end point and would therefore discontinue the makeup before they reached the end point. Furthermore, using the present invention it is possible that an abnormality could exist in the middle of the threaded connection, such as a defective thread which would weaken the connection, but still would meet the end requirement for a good connection. The present method and apparatus overcomes this problem, for the operator can visually observe that the measured torque/turns curve is abnormal, as for example, the torque would suddenly increase or the turns count would stop or an unusual hump would appear in the x-y plot. Therefore, the present invention provides a timely, accurate, and permanent record of the makeup of each joint. With the graphic representation of exactly what is happening in the torque/turns relationship, immediate evaluation is obtained. The operator using the x-y plot can see what is happening and can make an accurate prediction of where the plot is going to go at a very low level of torque as well as other abnormal shifts in the direction of the plot.

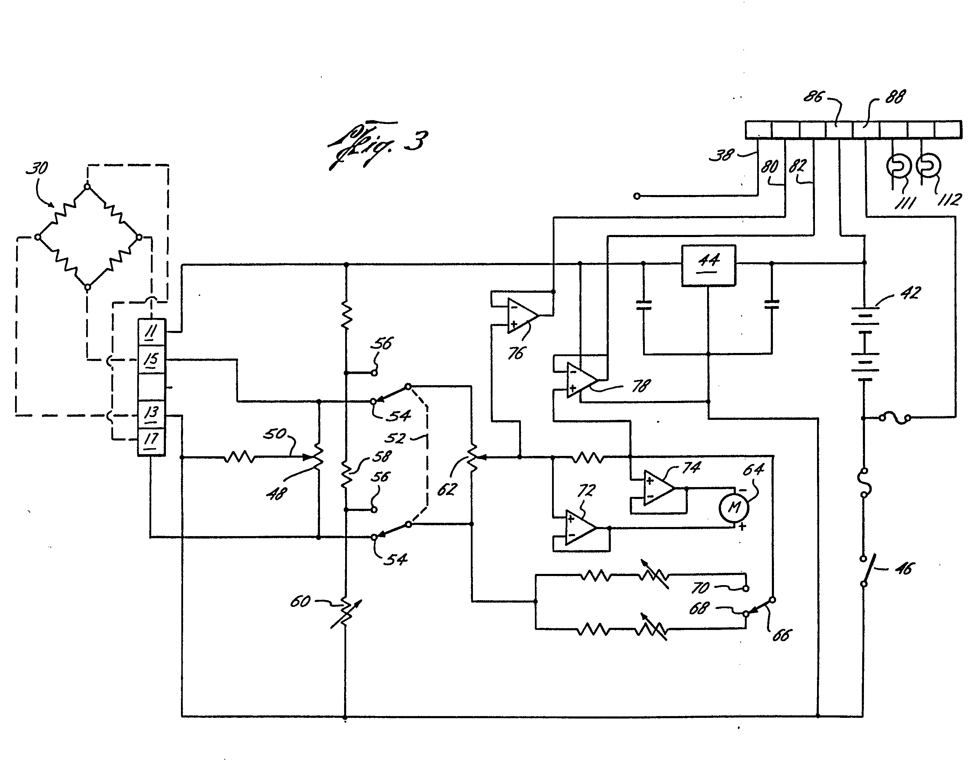

Referring now to Figures 1 and 3, a remote processing unit 40 is generally positioned adjacent the power tongs 10 for observance by the tong operator. The electric strain gauges 30 are preferably four solid state semiconductor gauges, such as silicon, formed in a Wheatstone bridge and connected to the unit 40. A voltage source, such as a battery 42 and a voltage regulator 44, provides

a d.c. input to the Wheatstone bridge 30 across terminals 11 and 13 and through a power switch 46. The output from the Wheatstone bridge 30 is applied to terminals 15 and 17. Thus, when torque is exerted by the rotary jaw member 12 on the well pipe 14, a voltage proportional to the amount of torque is produced in the Wheatstone bridge 30 between terminals 17 and 15. The output from the Wheatstone bridge 30 is applied across a potentiometer 48 having a zeroing arm 50 which is adjusted to provide a zero output with no load applied by the power tongs 10. The output from the potentiometer 48 flows through a double switch 52 having operating contacts 54 and test contacts 56. When the switch 52 is placed in the test position, a test voltage flows from the voltage regulator 44 through a resistor 58 and potentiometer 60. The potentiometer 60 is calibrated before the unit is used to provide a predetermined voltage output equal to a specific load on the strain gauge 30, for example 900 kg. This provides a test voltage across the resistor 58 when the switch 52 is in the test position on the contacts 56 for ensuring that the unit 40 is operable. Therefore, the output across the switch 52 is a voltage that is equivalent to a predetermined load and is a measurement of tension. Since the unit is to measure torque, the output of the switch 52 is applied across another potentiometer 62 which is adjusted in accordance with the length of the tong arm. For example, if the tong arm length is 0.3 m and the resistance 58, in the test position, has an output equivalent to 900 kg, the arm potentiometer 62 is adjusted to provide a 2611 nM torque reading on a meter 64. On the other hand, if the torque arm is 0.6 m, the potentiometer 62 is adjusted until the meter 64 reads 3222 Nm. Therefore, the potentiometer 62 allows the unit to be adjusted in the field to be calibrated with the correct torque arm length being used in the power tong 10. Therefore, one purpose of the potentiometer 62 is to provide an adjustment corresponding to the torque arm of the tong. Another feature of the test switch 52 and potentiometer 62 is to provide a test of the electronic circuits in the unit 40. With the potentiometer 62 turned all the way clockwise, its setting is equivalent to a 1.6 m torque arm. Therefore, with the test switch 52 in the test position on contacts 56 and the potentiometer 62 in the 1.6 m torque arm position, the meter 64 should read 13055 Nm. Using this test before using the apparatus, the electronics can be readily checked out.

The output from the potentiometer 62 is connected to a range switch 66 which can be switched to a low range contact 68 or a high range contact 70 which are connected to suitable resistance networks to provide different readout scales on the meter 64.

Four integrated circuits 72, 74, 76 and 78 are utilized to isolate the meter 64 and to provide torque measurement outputs 80 and 82 which are transmitted to the main processing unit 84. Terminals 86 and 88 may be connected to a battery charger for charging the battery 42.

The turns count from the microswitch 34 comes into the remote unit 40 by a line 38 for receiving a certain number of increments of the turn, for example 100 counts per turn. The output from the line 38 is transmitted to the master unit 84.

In addition, the remote unit 40 includes lights 111 and 112 which are actuated from the main processing unit 84 to indicate to the tong operator whether the threaded connection being made up is bad or good. The lights 111 and 112 may be actuated either automatically by the unit 84 or manually by the operator as will be more fully discussed hereinafter.

The remote unit 40 may be used independently to measure torque for other applications as the analogue circuitry has certain advantages over a digital torque measuring circuit by requiring less power, is less expensive, and the use of semiconductor strain gauges provides greater gain and consequentially the elimination of amplifiers and r-f interference.

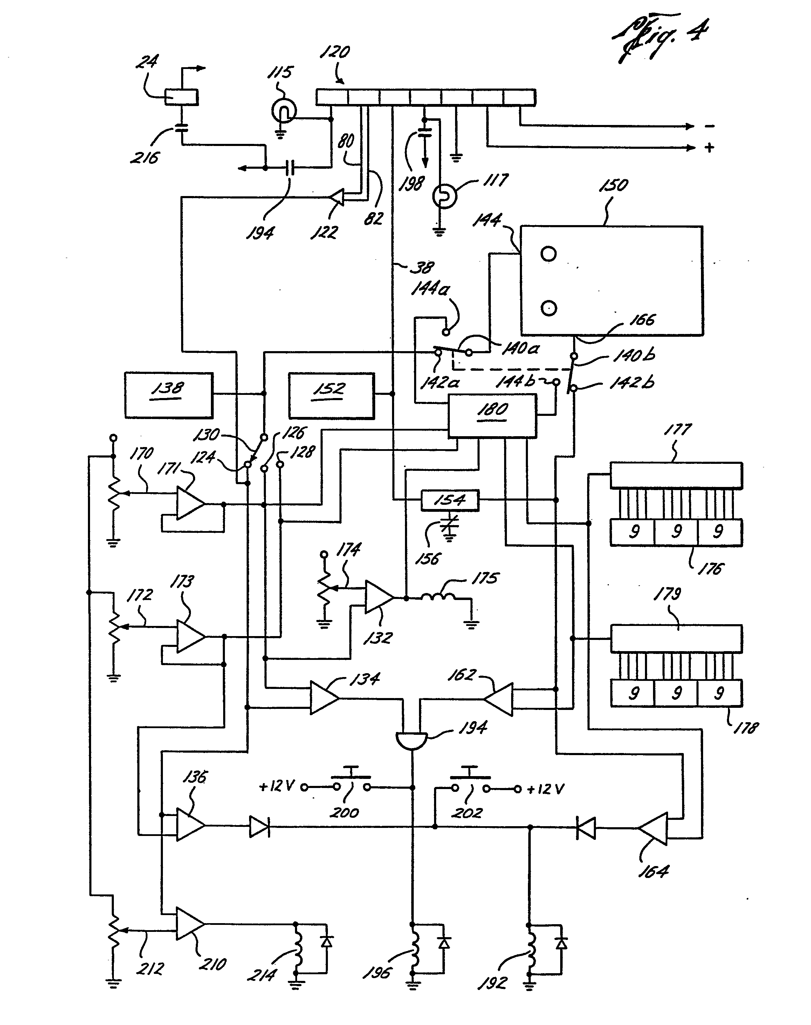

Referring now to Figure 4, the electrical schematic 120 of the main processing unit 84 is shown. The torque measurement signal from lines 80 and 82 from the unit 40 (Figure 3) are combined by differential amplifier 122 and transmitted to contact 124 of switch 130 and also to one side of a reference torque comparator 132, one side of a minimum torque comparator 134, and one side of a maximum torque comparator 136. When the switch 130 is on contact 124, the incoming torque measurement is also transmitted to digital volt meter 138, and to operating contact 142a of switch 140a. With 140a in the operating position, the incoming torque measurement is also transmitted to the x ordinate input 144 of a conventional x-y graphic display recorder 150, which causes its plotter pen 151 to deflect vertically proportional to the magnitude of the incoming torque measurement signal.

The turns count signal, which is composed of a series of measuring pulses, comes in on incoming line 38 to the digital count display 152 and to a digital to analogue converter 154 which is inhibited from producing an output signal as long as contact 156 is closed. Contact 156 will open as will be more fully discussed whenever the torque measurement exceeds the reference torque. When contact 156 opens and converter 154 is actuated, the measured turn signals will be transmitted to one side of a minimum turns comparator 162, and to one side of a maximum turns comparator 164. The turn measurement signals is also, transmitted to operating contact 142b of switch 140b. Switches 140a and 140b are mechanically interlocked. With switch 140b in the operating position, the turns count signal is transmitted to the y input 166 of the x-y recorder 150, causing the plotter pen 151 to move horizontally proportional to the value of the incoming turns signal.   Therefore, it is to be noted that the torque measurement will cause vertical movement of the pen 151 of the x-y plotter 150, while the turns incoming signal causes horizontal movement of the pen 151.   This causes a trace or recording to be produced which would be the torque/turn relationship during threaded engagement of the pipe 14 with the coupling 16 such as the graphs A,   B,C and D shown in Figure 2.

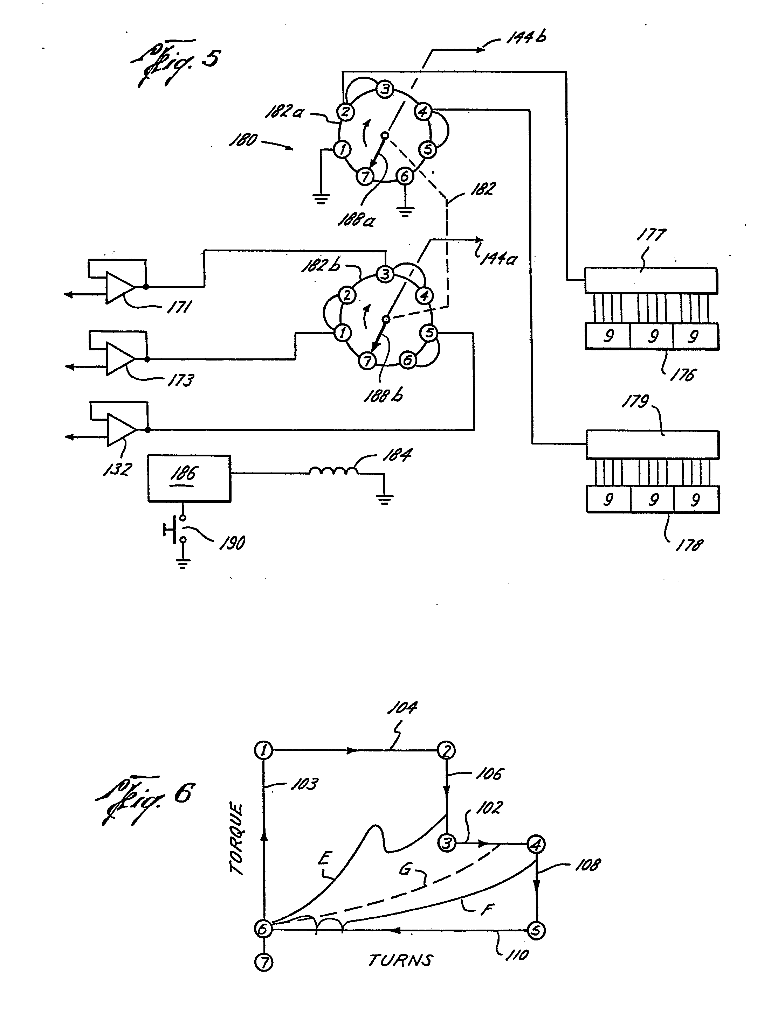

However, it is desirous that prior to actual measurement of a pipe makeup, that a graph be generated by the x-y plotter 150 which would record reference torque 110, minimum torque 102, maximum torque 104, minimum turns 106, and maximum turns 108 similar to that shown in the graph in Figure 2 to enable the operator to visually monitor the actual progress of a threaded engagement of pipes to determine whether or not any abnormality occurs during the makeup and/or to easily see if the makeup is proceeding to a good or defective makeup. Therefore, it is desirable that the x-y plotter prerecord a graph, such as seen in Figure 6, of lines 103, 104, 106, 102, 108, 110 and 113 which are similar to that shown in Figure 2.   With the aid of such a plot,   it is to be noted that anytime the measured torque/turns plot crosses line 104 or 108, the connection is classified as defective, whereas anytime the plot crosses lines 106 and 102, the connection is classified as a good connection.

Therefore, a skilled operator can visually observe the torque/turns x-y plot being made during a makeup, and determine before reaching the end of the makeup, whether the connection will be defective and in that event can signal the tong operator to cease makeup. However, if the torque/turn plot is proceeding towards the line 106 or 102 in a proper fashion, then no alarm is sent to a tong operator and makeup is allowed to continue.

In order to produce a graph similar to that shown in Figure 6, it is necessary to collect and store the programmed values of maximum torque, minimum torque, reference torque, maximum turns and minimum turns for the particular connection being made up.

Again referring to Figures 1 and 4, one way of storing the desired values is illustrated wherein potentiometers 170, 172, and 174, are provided to store the analogue information of minimum torque, maximum torque and reference torque, respectively. And thumb wheel switches 176 and 178 are provided to store minimum turns and maximum turns, respectively. Each potentiometer 170, 172 and 174 is powered by a regulated voltage and the wiper of each potentiometer is connected to a unity gain operational amplifier. The thumb wheel switches 176 and 178 are connected through a digital to analogue converter 177 and 179, respectively. To store the programmed information, refer now to Figures 3 and 4. First, in order to store the programmed minimum torque, switch 130 is moved to its operational position, contact 124 and is thus connected to the remote process unit 40. In unit 40, the zero control switch 50 can be rotated to simulate any torque from zero to full scale and by rotating the zero control switch 50 in unit 40 until a value equal to the programmed minimum torque is obtained, the digital volt meter 138 (Figure 4) will move to reflect this value. The operator observes this value, then switches switch 130 to contact 126 whereby the torque meter 138 is now monitoring the output of amplifier 171. The operator then rotates potentiometer 170 until the volt meter 138 reads the same as it did when the switch 130 was in position 124. This sets the potentiometer 170 for the minimum programmed torque. Similarly, the output of amplifier 172 is programmed by rotating the zero control 50 in unit 40 until the maximum programmed torque value is reached to provide a value on volt meter 138, rotate switch 130 to contact 128, and adjust potentiometer 172 until the volt meter 138 reads the same value as it did when the switch 130 was in operating position 124. The reference torque is programmed by moving the switch 130 to the operating contact 124, adjusting the zero control 50 of the unit 40 until the meter 64 reads reference torque, and then adjusting potentiometer 174 until the relay 175 is actuated.

As for the predetermined programme values of minimum turns and maximum turns, the programme values are merely dialed into the thumb wheel switches 176 and 178, respectively.

0018115

Referring now to Figures 4 and 5, an automatic plotter 180 utilizes the stored values of torque and turns to record the graph shown in Figure 6 on the chart of the x-y plotter 150. Switch 182 is a dual rotary switch comprising switches 182a and 182b having switch arms 188a and 188b jointly driven by a rotary solenoid 184. Each time a voltage pulse is transmitted to the solenoid 184,the switch arms of the switches 182a and 182b will move to the next position. If the pulse timer 186 emits one pulse every second, then the switch arms 188a and 188b will step clockwise from position 7 to position 1, then one second later will advance to position 2 and intermittently continue. To start this sequence of events, switch190 is actuated and at the end of seven pulses, the timer 186 will cut off automatically. It is noted that the wiper 188a of switch 182a is connected to contact 144b of switch 140b and that the wiper 188b of switch 182b is connected to contact 144a of switch 140a and to the x input of the x-y recorder 150.

Position 7 is a position of zero torque and zero turns and the position 7 on the switches 182a and 182b are not connected to any torque or turns value. However, position 1 on the switches 182a and 182b and the graph in Figure 6 is a point of zero turns, but maximum torque. Thus, position 1 on switch 182a is grounded to provide a zero voltage to the y axis of the recorder 150, but position 1 of switch 182 is connected to the maximum torque amplifier 173 to provide a maximum torque input to the x input of the recorder 150 thereby creating the line 103 when the wipers 188a and 188b have been pulsed to position 1 on the switch 182. That is, the pen 151 of recorder 150 will move upwardly to a pre-programmed maximum torque value, but will not move in a horizontal direction because no signal is introduced to the y input of the recorder 150.

When the pulse 182 sends a second pulse, switches 188a and 188b will advance to position 2. The maximum torque value is retained on position 2 by being jumpered to position 1 on rotary switch 182b, but position 2 of rotary switch 182a is now connected to the present value of minimum turns set in the digital to analogue converter 177 thereby causing the pen of the recorder 150 to deflect horizontally producing line 104. Similarly, when the switch 182 is pulsed to position 3, the y input to the plotter 150 retains the minimum turns value by a jumper between positions 2 and 3 on the rotary switch 182a while position 3 of switch 182b is connected to the minimum torque amplifier 171 to provide a minimum torque value to the x axis of the plotter 150 to provide graph 106. The fourth pulse advances the rotary switch 182 to position 4 with position 4 on switch 182a connected to the maximum turns stored value through converter 179 and position 4 of switch 182b being jumpered to position 3 to the minimum torque value to produce line 102. The movement of the switch 182 to position 5 connects the reference torque to the x input of the plotter and the maximum turns to the y input of the plotter producing line 108.

Movement to position 6 places the zero turn signal of switch 182a on the y input and reference torque of switch 182b on the x input producing line 110. When the switch 182 completes its cycle, the pen of recorder 150 will be at point 7 and the equipment is ready to measure and record a pipe makeup.

To record a makeup of a joint connected switches 140a and 140b are returned to the operating position contacting contacts 142a and 142a, respectively, switch 130 is returned to its operating position on contact 124. When the makeup begins, the torque measurement is transmitted to the comparator 132 for a comparison with reference torque. However, since the digital to analogue converter 154 is inhibited by contact 156 the turns measurement is not supplied to the y input of the recorder 150. When the reference torque value is reached, the comparator 132 produces a voltage on its output and energises relay 175 which opens its contact 156 allowing the turns measurement or count to pass through the digital to analogue converter 154 to the y input 166 of the recorder 150. As the makeup continues, the recorder pen 151 of recorder 150 moves both vertically and horizontally producing a trace of the torque/turns relationship of the threaded connection being made up. If the maximum torque value is reached, the comparator 136 is actuated and closes relay 192 and closes contact 194 to energize red warning light 111 located in the remote unit 40 whereby the tong operator knows to shut off the tongs and cease makeup. Similarly, if a maximum turns measurement is transmitted, comparator 164 is actuated and again energises relay 192 and contact 194 to energize the red warning light 111 to cause the tong operator to shut off the tongs as well as energizing red warning light 115 on unit 84.

A good makeup is defined as a point where both minimum torque and minimum turns values have been reached without encountering maximum torque or maximum turns. Comparator 134 will be energized when a minimum torque measurement is detected, and comparator 162 will be energized when a minimum turns measurement is detected. The outputs of comparators 134 and 162 are directed to an AND gate 194. When the AND gate 194 detects positive inputs on both of its inputs, a voltage is produced on its output and this voltage energizes relay 196 causing contact 198 to close to turn on the green light 112 in remote unit 40 as well as the green light 117 on unit 84. The tong operator turns off the tong 10 upon seeing the green lamp 112 as that is an indication that a good connection has been made up.

It is possible for the operator to manually produce a good or bad indication if he so desires. Thus pressing switch 200 energizes relay 196 to turn on the "good" green lamp 112 in the remote unit unit 40, and the pressing switch 202 energizes relay 192 to turn on the "bad" red lamp 111 in the remote unit 40.

The x-y graphic display of the measured torque and measured turns allows an observer to examine the torque/turns relationship during makeup and reject the connection at a low value if an abnormality exists. For example, referring to Figure 6, the graph E would by automatic measuring standards be determined to be a good joint since it terminated along line 106. However, it is noted that the torque/turns graph E has an abnormality 206 indicating a falloff in torque during the makeup indicating a defective thread such as a stripped thread. On the other hand, referring to makeup graph F, the automatic measuring circuit would classify the joint as a bad joint since it terminated along line 108. However, graph F indicates that the turns measurement fell below the reference torque at points 208 and therefore is not a true indication of the makeup, and the dashed line G would be a more accurate indication of the makeup of that particular joint which would be a good joint. Therefore, a skilled operator by observing the progress of the makeup of a threaded connection can quickly determine whether or not, and with more accuracy than the automatic measuring of end points, a joint is good or bad.

Referring now to Figure 2, the generally typical type of threaded makeup for oil field goods is the one shown by graph D. That is, the rise in torque is generally uniform until the shoulders on the male and female members of the threaded connection hit. This may have several disadvantages. First, this hitting of the shoulder provides a hammer blow which is not truely a makeup torque, but may be erroneously recorded as such. Furthermore, the torque rapidly increases after the shoulders are engaged and frequently a threaded joint may be over-torqued before the tongs 10 can be stopped. Another feature of the present invention is the provision of means for reducing the speed of makeup when the makeup joint reaches some selected predetermined torque, preferably before the joint shoulders up. Thus, referring to Figure 4, a comparator 210 is provided, one side of which is connected to contact 124 and the second side of which is connected to a potentiometer 212 which may be adjusted as desired to suitably actuate a relay 214 when the measured torque reaches a predetermined amount. Actuation of the relay 14 actuates a contact 216 to throttle down the bypass valve 24 in the tongs 10 (Figure 1) thereby slowing down the speed of rotation of the tongs.

CLAIMS:-

1.        A method for making up a threaded connection
of two members (14, 16) having mating threads,
threadedly interengaging said mating threads while
simultaneously measuring the torque required to
turn one of said members (14) relative to the other
member (16) and simultaneously counting the number of
rotative turns of said one member (14) relative to
the other member (16), characterised by recording on
an x-y graphic display the values of minimum and
maximum turns, and reference, minimum, and maximum
torque for the made up connection, and simultaneously
plotting the measured torque and measured turns
on the x-y graphic display relative to the values
of minimum and maximum turns, and reference,
minimum, and maximum torque for the made up connection.

2.        A method as claimed in Claim 1, in which
the threaded interengagement is stopped prior to
the occurrence of failure in the event the graphic
display indicates that the makeup is proceeding to
failure (A, B).

3.        A method as claimed in Claim 1 in which
the speed of interengagement of the threads is
reduced when the measured torque reaches a predetermined
torque during the interengagement.

4.        A method for making up two members (14, 16)
having threaded ends including threadedly interengaging
said mating threaded ends until a predetermined reference
torque is required to further threadedly interengage
said mating threaded ends, and thereafter further
threadedly interengaging said mating threaded ends
while measuring the number of turns of said one member
relative to the other member and measuring the torque, characterised by prerecording on an x-y graphic
display the boundary values of minimum and maximum
turns (106, 108), and reference, minimum, and maximum
torque (110, 102, 104) for the made up connection,
and during the threaded interengagement of
the mating ends plotting the measured torque
and measured turns on the x-y graphic display (A-D)
whereby the progress of the interengagement may be
compared with the prerecorded values for determining
whether an abnormality exists.

5.      A method as claimed in Claim 4 in which
the threaded interengagement is stopped prior to the
occurrence of failure in the event the graphic display
indicates that the makeup is proceeding to failure
(A, B).

6.      A method as claimed in Claim 4 in which
during the interengagement of the threads the
measured torque is compared with a predetermined
torque and the speed of the interengagement is reduced
when the measured torque exceeds the predetermined
torque.

7.      An apparatus for making up two members (14,
16) having mating threads, comprising means (20)
for rotating one member (14) relative to the second
member (16), means (30) for measuring the torque
required to make up the threaded connection, means
(32, 34) for measuring the number of turns of rotation
of one member (14) relative to the second member (16),
characterised in that an x-y graphic recorder (151)
connected to the means  for measuring the torque
and turns for simultaneously plotting the torque and
turns relationship as the threaded connection is
being made up, and means (150) connected to the x-y recorder (150) for recording predetermined values
of minimum and maximum turns, and reference, minimum,
and maximum torque for the threaded connection
onto the graphic recorder prior to plotting
the torque and turns relationship whereby any
abnormality that may exist may be visually
observed as the mating threads are interengaged.

8.　　　　An apparatus as claimed in Claim 7
wherein the means for recording include storage
means (170-178) for storing each of the
predetermined values of turns and torque,
and switching means (130) connected between each
of the storage means and the x-y recorder, said
turns values connected to one of the x-y inputs of
the recorder, and said torque values connected to
the other of the x-y inputs, or the recorder for
recording the boundary parameters indicating whether
a made up connection is good or bad.

9.　　　　An apparatus for making up two members (14,
16) having mating threads including means (20) for
rotating one member relative to the second member,
means (30) for measuring the torque required to make
up the threaded connection, means (32, 34) for
measuring the number of turns of rotation of one member
relative to the second member, and means (170-178) for
storing values of minimum and maximum turns, and
reference, minimum, and maximum torque, characterised
by an x-y graphic recorder (151) having an x input
and a y input (166) one of the inputs being connected
to the stored values of turns, and the other input
(144) being connected to the stored values of torque
whereby the stored values of torque and turns for
recording the boundary parameters indicating whether a
made up connection is good or bad, and said means (32, 34) for measuring the turns of rotation being connected to said one input (166) and said means (30) for measuring the torque being connected to said other input (144) for recording a graphic display of the measured values during the makeup for detecting any abnormality during the makeup.

10.     An apparatus as claimed in Claim 9 in which means are provided for reducing the speed of rotating one member relative to the second member when the measured torque reaches a predetermined value.

11.     An apparatus as claimed in Claim 7 wherein the means for measuring the torque required to make up the threaded connection includes a voltage regulated dc power supply (40, 42) a tension measuring transducer means connected to the power supply including a plurality of semiconductor strain gauges (30) connected in a Wheatstone bridge circuit, a zeroing potentiometer (48) having an input and an output, the input being connected to the bridge circuit, a test resistance (58) of a predetermined value connected to the dc supply for providing an output of a predetermined tension value, a test switch (52) having an input for connection to either the test resistance (58) or the output of the zeroing potentiometer (48) thereby receiving either a test load or a measured tension load, a torque arm potentiometer (62) having an input and an output, the input being connected to the test switch (52) for connecting the tension input to a torque output, and a torque meter (64) connected to the output of the torque arm potentiometer.

12.     An apparatus for measuring the torque required to make up a threaded connection between two

members having mating threads characterised by
tongs (10) for rotating one member (14)
relative to the second member (16), tension measuring
transducer means connected to the tongs including
a plurality of semiconductor strain gauges (30)
connected in a Wheatstone bridge circuit, a voltage
regulated dc power supply (40, 42) connected to
the bridge circuit, a zeroing potentiometer (48)
having an input and an output, the input connected
to the bridge circuit, a test resistance (58)
of a predetermined value connected to the dc power
supply for providing an output of a predetermined
tension value, a test switch (52) having an input
for connection to either the test resistance (58) or
the output of the receiving potentiometer (48) for
receiving either a test load or a measured tension
load, a torque arm potentiometer (62) having an
input and an output, the input being connected
to the test switch(52) for converting the tension
input to a torque output, and a torque meter (64)
connected to the output of the torque arm potentiometer
(62).

Fig. 1

0018115

*Fig. 2*

0018115

Fig. 3

_Fig. 4_

5/5

0018115

Fig. 5

Fig. 6

## DOCUMENTS CONSIDERED TO BE RELEVANT

| Category | Citation of document with indication, where appropriate, of relevant passages | Relevant to claim |
|---|---|---|
| DX | US - A - 4 091 451 (WEINER)<br>* Figure 2, column 5, lines 14-22; column 4, lines 9-11; column 5, lines 1-3; column 8, line 49 to column 9, line 30; column 3, lines 5-8 * | 1-10 |
| | -- | |
| X | US - A - 3 440 869 (HARDIMAN)<br>* Column 1, lines 42-47; column 4, lines 11-26 * | 1,4,7-9,11-12 |
| | -- | |
| X | US - A - 3 895 517 (OTTO)<br>* Abstract * | 11,12 |
| | ---- | |

**CLASSIFICATION OF THE APPLICATION (Int. Cl. 3)**

B 25 B 23/14
E 21 B 19/16
G 01 L 5/24

**TECHNICAL FIELDS SEARCHED (Int.Cl. 3)**

G 01 L
B 25 B
E 21 B

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search<br>The Hague | Date of completion of the search<br>05-08-1980 | Examiner<br>SOGNO |
|---|---|---|

EPO Form 1503.1 06.78